# EUROPÄISCHE PATENTSCHRIFT

(11) **EP 0 328 874 B1**
(45) Veröffentlichungstag und Bekanntmachung des Hinweises auf die Patenterteilung: **12.05.1993**
(21) Anmeldenummer: 89100532.4
(22) Anmeldetag: 13.01.1989
(51) Int. Cl.: B01D 53/34

(54) **Verfahren und Anlage zur trockenen Reinigung von Schadstoffen enthaltendem Abgas**
Process and plant for dry purification of waste gas containing sour pollutants
Procédé et installation pour la purification sèche de gaz d'échappement contenant des polluants acides

(30) Priorität: 18.02.1988 DE 3805037
(43) Veröffentlichungstag der Anmeldung: 23.08.1989
(73) Patentinhaber: Klöckner-Humboldt-Deutz Aktiengesellschaft, 51149 Köln (DE)
(72) Erfinder: Rizzon, John, D-5064 Rösrath (DE)

(56) Entgegenhaltungen:
- EP-A- 0 225 178
- DE-A- 3 536 899
- DE-U- 7 716 772

## Beschreibung

Die Erfindung betrifft ein Verfahren zur trockenen Reinigung von eine Mehrzahl von Schadstoffen enthaltendem Abgas, in das ein Feststoff-Sorbens eingebracht wird, welches nach Schadstoffbelastung vom gereinigten Abgas abgetrennt wird.

Die Abgase aus Abfallverbrennungsanlagen (Müllverbrennung, Sondermüllverbrennung, Klärschlammverbrennung usw.) enthalten saure Schadstoffe wie SOₓ, HCl, HF, NOₓ, flüchtige Schwermetalle usw. sowie oft auch Hg-Verbindungen, die eine Abgasreinigung erforderlich machen, um die Emissionswerte, wie in der Technischen Anleitung "TA-Luft" gefordert, sicher einhalten zu können.

Bei der Abgasreinigung sind im wesentlichen drei Verfahren bekannt: Naßwaschverfahren, Quasi-Trockenverfahren und Trockenverfahren. Beim Naßwaschverfahren entstehen in unerwünschter Weise schadstoffhaltige Abwässer. Beim halbtrockenen Quasi-Trockenverfahren wird das vergleichsweise aufwendige Sprühadsorptionsverfahren eingesetzt. Beim abwasserlosen Trockenverfahren hat sich in der Technik die mit einem basischen Feststoff-Sorbens betriebene sogenannte Trockensorption mit zirkulierender expandierter Wirbelschicht (z. B. Aufsatz "Trockene Schadgasbeseitigung aus Abgasen von Müllkraftwerken" in Zeitschrift "Chemie-Ingenieur-Technik" 56, 1984 Nr. 3 Seiten 201 und 202) oder mit stationärer Wirbelschicht durchgesetzt. Kennzeichnend für diese bekannte Abgasreinigungen durch Trockensorption ist, daß das Feststoff-Sorbens in den zu reinigenden Abgasstrom an einer einzigen Stelle bei einem bestimmten Abgastemperaturniveau eingegeben wird. Die Trockensorption betrieben in nur einem einzigen Abgastemperaturniveau ist aber nicht optimal durchführbar, weil dabei die wesentlichen Abgasschadstoffe SOₓ, HCl, HF usw. vom Sorbens nicht gleichzeitig ausreichend gut absorbiert bzw. adsorbiert werden können.

Es ist auch bekannt, die Rauchgase eines Dampferzeugers bei hoher Temperatur (800 bis 1000 °C) durch Zugabe eines Feststoff-Sorbens (SO₂-Additiv) zu entschwefeln und bei niedrigerer Temperatur (< 700 °C) ebenfalls durch Zugabe eines Feststoff-Sorbens (HF/HCl-Additiv) zu enthalogenisieren (DE-A-35 36 899). Auch ist es bekannt, schwefelhaltiges Rauchgas eines Ofens durch zweimalige Zugabe eines trockenen Ca-haltigen Sorbens zu entschwefeln, nämlich durch Zudosierung zum Rauchgas bei 150 °C sowie danach durch Zudosierung in dasselbe Rauchgas in Taupunktnähe bei 55 bis 60 °C (EP-A-2 251 178). Diese bekannten Verfahren zur Reinigung von Rauchgasen aus Öfen wie z. B. Dampferzeuger, bei denen es im wesentlichen nur auf die Entschwefelung und Entstickung ankommt, wären nicht geeignet, aus der Müllverbrennung kommende Abgase zu reinigen, die eine Vielzahl unterschiedlich reagierender Schadstoffe enthalten.

Der Erfindung liegt die Aufgabe zugrunde, die abwasserlose Abgasreinigung durch Trockensorption auch bei Müllverbrennungsanlagen so zu verbessern, daß ohne großen apparativen Aufwand alle wesentlichen Abgasschadstoffe wie SOₓ, HCl, HF usw. vom Sorbens gebunden werden und dabei noch Energie gespart wird.

Diese Aufgabe wird gemäß der Erfindung mit einem Verfahren gelöst, das mit vorteilhaften Ausgestaltungen in den Ansprüchen 1 bis 4 gekennzeichnet ist.

Dadurch, daß gemäß der Erfindung der heiße Abgasstrom in mehreren hintereinander angeordneten Stufen durch indirekte Wärmeübertragung auf wenigstens drei unterschiedlich hohe abgestufte Temperaturniveaus stufenweise abgekühlt wird und daß in den Abgasstrom bei jeder unterschiedlichen Temperaturstufe jeweils nur eine Teilmenge der zur Absorption bzw. Adsorption der Schadstoffe benötigten Sorbens-Gesamtmenge eingebracht wird, werden in jedem der Abgastemperaturfenster selektiv jeweils bestimmte Schadstoffe vom Feststoff-Sorbens (Reagenz) optimal gebunden. Es hat sich herausgestellt, daß im Temperaturfenster bzw. beim Temperaturniveau von ca. 900 bis ca. 1050 °C die Absorption bzw. Adsorption von SOₓ optimal verläuft, jedoch kaum die Einbindung von HCl und HF; bei Abgastemperaturen unterhalb 500 °C, z. B. im Temperaturfenster von ca. 300 bis ca. 400 °C findet eine bevorzugte Einbindung von HCl sowie HF gegenüber SOₓ am basischen Sorbens statt; bei Abgastemperaturen kleiner ca. 200 °C verläuft die Absorption bzw. Adsorption von SOₓ am Sorbens wieder optimal. Das heißt, daß bei der erfindungsgemäßen Trockensorption der zu reinigende Abgasstrom auf wenigstens diesen drei Temperaturniveaus gehalten wird. Je nach Bedarf kann der Abgasstrom auch noch bei einer anderen Temperaturstufe wie z. B. 500 bis 600 °C gehalten werden.

In den Kühlstufen der mehrstufigen Trockensorption wird gleichzeitig jeweils eine gezielte Wärmemenge des Abgases ausgekoppelt. Die Wärmeauskopplung wird weiterhin noch dadurch verbessert, daß die Suspension aus reagiertem und teils unreagiertem Sorbens und des Abgases einen guten Wärmeübergang an die Wärmeübertragungsfläche des jeweiligen Abgaskühlers bewirkt. Die an ein Kühlmedium übertragene Wärmemenge kann zur Dampferzeugung oder zum Aufwärmen von Verbrennungsluft oder von Brüden oder für andere anfallende Gase aus Prozessen genutzt werden, so daß die erfindungsgemäße mehrstufige Trockensorption energiesparend ist.

Als Feststoff-Sorbens bzw. Reagenz können basische Sorbentien wie feinkörniger Kalkstein, Branntkalk, hochaktives Kalkhydrat oder andere feinkörnige Alkali- oder Erdalkaliverbindungen und/oder metallisch schwefelaffine Sorbentien wie z. B. CuO, ZnO, Fe₂0₃, FeO oder dergleichen verwendet werden.

Die Verweilzeit der in den Abgasstrom eingebrachten Sorbens-Teilmengen im Abgasstrom jeweils bis zum Erreichen des jeweils folgenden Abgaskühlers wird bewußt kurz gehalten, weil die Reaktionen von SOₓ an Kalk bereits innerhalb von 0,5 Sekunden und an Kalkhydrat bereits nach ca. 0,2 Sekunden abgelaufen sind. Das heißt, daß die Sorbens-Oberfläche bereits nach wenigen Zehntelsekunden zur weiteren Reaktion mit SOₓ nicht mehr zur Verfügung steht, da sich auf der Sorbens-Oberfläche eine dünne Schicht von Calciumsulfat gebildet hat und die Oberfläche damit nicht mehr aktiv ist.

Die Erfindung und deren weitere Merkmale und Vorteile werden anhand der in den Figuren schematisch dargestellten Ausführungsbeispiele näher erläutert.

Es zeigt:
- Fig. 1:: schematisch eine erste Ausführungsform der erfindungsgemäßen Abgasreinigung mit Trockensorption der insbesondere sauren Abgasschadstoffe;
- Fig. 2: einen Schnitt längst der Linie II-II der Fig. 1;
- Fig. 3: eine andere Ausführungsform des Apparates zur mehrstufigen Trockensorption;
- Fig. 4: einen Schnitt längst der Linie IV-IV der Fig. 3;
- Fig. 5: einen Schnitt längst der Linie V-V der Fig. 3;
- Fig. 6: eine weitere Ausführungsform eines Apparates zur mehrstufigen Trockensorption;
- Fig. 7: einen Schnitt längst der Linie VII-VII der Fig. 6 und
- Fig. 8: ebenfalls im Querschnitt eine im Vergleich zu Fig. 7 ähnliche Variante.

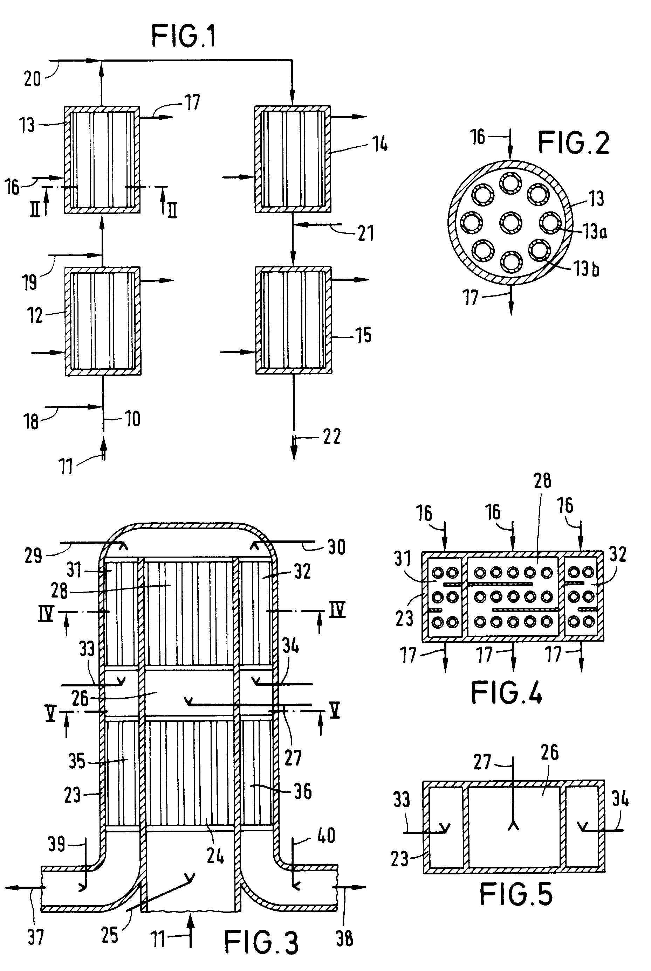

Nach der Ausführungsform der Fig. 1 sind in der Abgasleitung (10), die das heiße Abgas (11) z. B. einer Müllverbrennung transportiert, z. B. vier Abgaskühler (12, 13, 14, 15) hintereinander angeordnet. Das die sauren Schadgase SOₓ, HCl, HF und dgl. und gegebenenfalls Quecksilberverbindungen enthaltende heiße Abgas (11) kann eine Temperatur von z. B. 1.000° C aufweisen. Der Abgasstrom (11) wird in den Kühlstufen (12 bis 15) durch indirekte Wärmeübertragung stufenweise abgekühlt, von 1.000° C auf z. B. 500° C beim Austritt aus dem Kühler (12), auf z. B. 350° C beim Austritt aus dem Kühler (13), auf z. B. 200° C aus dem Kühler (14) und auf z. B. 120° C beim Austritt aus dem Kühler (15).

Wie aus der vergrößerten Querschnittszeichnung der Fig. 2 deutlich hervorgeht, sind der Abgaskühler (13) sowie auch alle übrigen Kühler als Rohrbündel-Wärmeübertrager ausgebildet, wobei das abzukühlende Abgas in den Rohren (13a, 13b usw.) strömt, während das bei (16) einströmende und bei (17) ausströmende Kühlmedium wie z. B. Wasser die Rohre (13a, 13b usw.) umströmt.

Erfindungsgemäß wird in den Abgasstrom (11) an mehreren Stellen bei verschiedenen Temperaturstufen jeweils eine Teilmenge der zur Absorption bzw. Adsorption der Schadstoffe benötigten Gesamtmenge eines feinkörnigen Feststoff-Sorbens in den Abgasstrom pneumatisch eingedüst, im Ausführungsbeispiel nach Fig. 1 eine Sorbens-Teilmenge (18) in Abgasströmungsrichtung gesehen vor dem ersten Kühler (12), eine Sorbens-Teilmenge (19) hinter dem ersten Kühler (12), eine Sorbens-Teilmenge (20) hinter dem Kühler (13), eine Sorbens-Teilmenge (21) hinter dem Kühler (14) und ggf. noch eine weitere Sorbens-Teilmenge hinter dem letzten Kühler (15). In jedem der verschiedenen Abgastemperaturstufen abgestuften Temperaturniveaus werden selektiv jeweils bestimmte Schadstoffe vom Feststoff-Sorbens (Reagenz) optimal gebunden, nämlich SOₓ einerseits sowie HCl und HF andererseits. Die in den Gaskühlern ausgekoppelte Wärme kann zum Betrieb wärmeverbrauchender Prozesse voll ausgenutzt werden. Charakteristisch für die erfindungsgemäße Trockensorption ist, daß dem Abgasstrom (11) immer wieder bei jeweils unterschiedlichen Abgastemperaturen frisches hochaktives Feststoff-Sorbens wie z. B. Kalkstein, Branntkalk oder Kalkhydrat zudosiert wird, wodurch Rechnung getragen ist, daß für die zu bindenden sauren Abgasschadstoffe immer wieder eine frische Sorbensoberfläche zur Verfügung steht, nachdem sich die Oberfläche des feinkörnigen Sorbens bereits nach wenigen Zehntelsekunden mit den jeweils reagierenden Schadstoffen beladen hat und für weitere Reaktionen nicht mehr zur Verfügung steht. Wenigstens die in den Abgasstrom (10) vor der ersten Kühlstufe jeweils eingebrachte Sorbens-Teilmenge ist im Verhältnis zu der im Abgas jeweils vorhandenen Schadstoffmenge unterstöchiometrisch, dagegen ist die allen Kühlstufen zugeführte Sorbens-Gesamtmenge, also die Summe der Sorbens-Teilmengen (18, 19, 20 und 21), im Verhältnis zur Schadstoff-Gesamtmenge überstöchiometrisch, das heißt (Ca/S) gesamt = etwa 1,3 bis 1,8. Der den letzten Gaskühler (15) verlassende Abgasstrom (22), der das reagierte, mit den Abgasschadstoffen beladene Sorbens sowie den Rest unreagierten Sorbens enthält, wird zu einem nicht dargestellten Staubabscheider geführt, z. B. Tuchfilter, Schüttschichtfilter oder dgl. Feinstentstauber, in welchem die Stäube vom gereinigten Abgasstrom abgetrennt werden. Diese abgetrennten Stäube enthalten die Abgasschadstoffe in Form von CaSO₄, CaSO₃, CaCl₂, CaF₂ und dergleichen Verbindungen. An die erfindungsgemäße Abgasreinigung kann sich dann noch eine Anlage zur Entfernung der restlichen NOₓ-Bestandteile des Abgases anschließen.

Bei der Variante der Fig. 3 sind die Abgaskühler durch Umlenkung und ggf. Verzweigung des Abgasstromes (11) innerhalb eines gemeinsamen Gehäuses (23) angeordnet. Hier strömt das heiße Abgas (11) von unten in den ersten Gaskühler (24) ein. Vor Eintritt in den ersten Gaskühler wird dem Abgasstrom (11) eine Sorbens-Teilmenge (25) zudosiert.

Nach der ersten Abkühlung gelangt das Abgas in einen Sammelraum (26), in welchen eine weitere Sorbens-Teilmenge (27) pneumatisch eingedüst wird. Der Apparat ist derart gestaltet, daß eine optimale Verteilung des Sorbens erreicht wird und Verweilzeiten von ca. 0,2 bis 0,5 Sekunden erreicht werden. Das Abgas, welches mit den Schadstoffen wie SOₓ, NOₓ, HCl, HF usw. beladen ist, gerät im Sammelraum optimal in Berührung mit dem Sorbens, so daß das Sorbens innerhalb kurzer Zeit weitestgehend vollständig ausreagiert. Durch das Eindüsen des kalten Sorbens erfolgt ebenfalls eine Abkühlung des Abgasstromes. Das mit Feststoff beladene Abgas strömt in einen weiteren Gaskühler (28), der, wie Fig. 4 zeigt, ebenfalls ein Rohrbündel-Wärmeübertrager ist, bei dem das Kühlmedium (16, 17) wie z. B. Wasser die einzelnen Kühlrohre ebenfalls umströmt. Der Wärmeübergang an die einzelnen Rohre ist speziell bei höheren Temperaturen, bei denen der Wärmestrahlungsanteil noch eine Rolle bei der Wärmeübertragung spielt, durch die Feststoffbeladung des Abgases erhöht. Die trockene Dosierung des Sorbens verhindert weitestgehend ein Anbacken des Sorbens an die Rohre. Bedingt durch die hohen Gasgeschwindigkeiten findet ein Selbstreinigungseffekt durch die Feststoffpartikel an den Rohren statt. Nach Austritt des Abgases aus dem Wärmetauscher (28) wird das Gas umgelenkt und in zwei Teilströme aufgeteilt und die beiden Gasteilströme, denen nochmals Sorbens (29, 30) zudosiert wird, werden weiteren Gaskühlern (31, 32) zugeleitet. Nach Austritt aus diesen Gaskühlern (31, 32) kann dem Abgas nochmals Sorbens (33, 34) zugegeben werden und das Abgas wird weiteren Gaskühlern (35, 36) zugeleitet. In die die Gaskühler (35, 36) verlassenden Abgasteilströme (37, 38)kann nochmals Sorbens (39, 40) zudosiert werden. Nach Beendigung der Sorbensdosierung und Gaskühlung werden die Abgasteilströme (37, 38) einer nicht dargestellten Entstaubung zugeleitet.

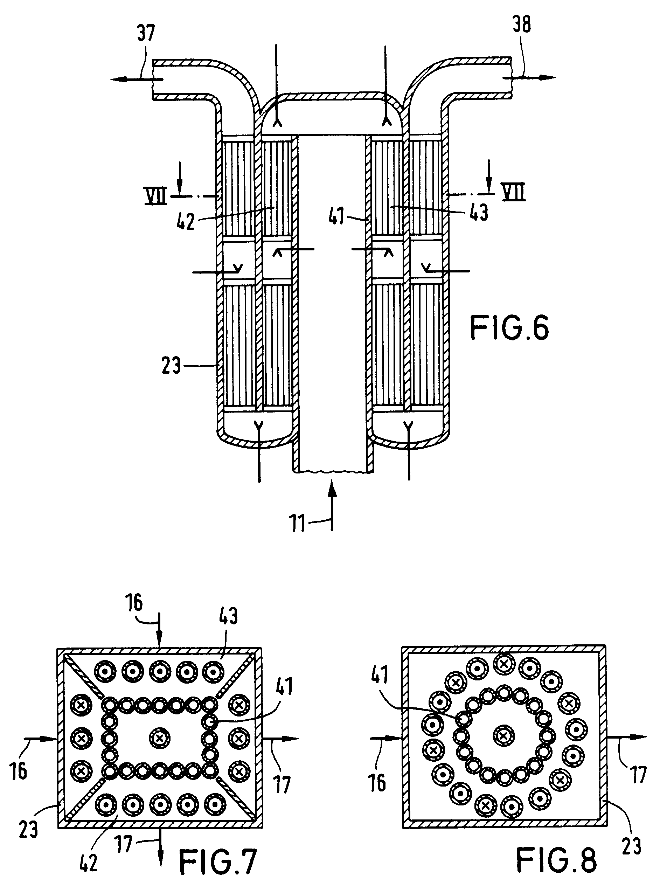

Die Abgasreinigung durch Trockensorption der Fig. 6 ist ähnlich aufgebaut wie diejenige der Fig. 3. Der hauptsächliche Unterschied liegt darin, daß das heiße Abgas (11) die erste Abkühlung durch Wärmeübertragung an eine Dampfkessel-Rohrmembranwand (41) erfährt, bevor das Abgas in die weiteren als Rohrbündel-Wärmeübertrager ausgebildeten Gaskühler (42, 43 usw.) geleitet wird. Diese Variante ist besonders geeignet für sehr hohe Abgaseintrittstemperaturen von z. B. über 1.000° C, z. B. 1.500° C, wobei ein Teil der Wärmemenge vorwiegend durch Strahlung an die Dampfkessel-Membranwand (41) abgegeben wird. Die SorbensEindüsungsstellen sind in Fig. 6 eingezeichnet, aber im Gegensatz zu Fig. 3 nicht mehr mit Bezugsziffern versehen. Die einzelnen Rohrbündel-Wärmeübertrager der Querschnittszeichnung der Fig. 7 sind in Fig. 6 der Einfachheit halber so gezeichnet, als wären sie in einer Vertikalebene nebeneinanderliegend angeordnet. Während bei Fig. 7 die Dampfkessel-Membranwand (41) einen abgasführenden vertikalen Schacht rechteckigen Querschnittes bildet, ist nach der Variante der Fig. 8 die Rohrmembranwand (41) als abgasführender Schacht runden Querschnittes ausgebildet. Das in die Strömungsquerschnitte der Fig. 7 und 8 gezeichnete x soll verdeutlichen, daß dort das Abgas aufwärts von unten nach oben strömt, während der in die Strömungsquerschnitte der Fig. 7 und 8 gezeichnete Punkt verdeutlichen soll, daß dort das Abgas abwärts von oben nach unten strömt.

Die in den Fig. 1 bis 8 schematisch dargestellte Apparateanordnung kann stehend oder liegend sein.

Der vom gereinigten Abgasstrom im Staubabscheider abgeschiedene Staub, insbesondere das mit den Abgasschadstoffkomponenten beladene Feststoff-Sorbens wird einer Weiterverarbeitung zugeführt, z. B. einer Brikettierung. Da der abgeschiedene Staub noch zum Teil unreagiertes Sorbens beinhaltet (Ca/S = 1,3 bis 1,8), kann ein Teilstrom des abgeschiedenen Staubes insbesondere zur ersten Sorptionsstufe zurückgeführt werden. Dadurhc kann eine noch bessere Ausnutzung des Sorbens erreicht werden.

Die aus dem Abgasstrom auskondensierten Quecksilberverbindungen können auf der Staubschicht bzw. dem Filterkuchen des nicht dargestellten Staubabscheiders bei Temperaturen etwa kleiner 150° C zurückgehalten werden, bevor der Abgasstrom gegebenenfalls nach einer Wiederaufwärmung seiner Entstickung zugeführt wird. Auf diese Weise wird auch erreicht, daß der zur Entstickung eingesetzte Katalysator nicht durch Quecksilber vergiftet wird. Wird der Abgasstrom im Staubabscheider auf einer Temperatur größer 150° C gehalten, so gehen durch den Staubabscheider die Quecksilberverbindungen gas- bzw. dampfförmig mit dem Abgasstrom hindurch, der anschließend der kombinierten Entstickung, Restentschwefelung und Hg-Entfernung zugeführt wird, z. B. einem Aktivkohle- oder Aktivkoksfilter. Auf diese Weise wird auch erreicht, daß der vom Abgasstrom im Staubabscheider abgeschiedene Staub, insbesondere das mit den sauren Abgasschadstoffkomponenten beladen Feststoff-Sorbens und das abgeschiedene noch nicht verbrauchte unreagierte Sorbens frei von Hg bleiben.

## Patentansprüche

1. Verfahren zur trockenen Reinigung von eine Mehrzahl von Schadstoffen enthaltendem Abgas, in das ein Feststoff-Sorbens eingebracht wird, welches nach Schadstoffbelastung vom gereinigten Abgas abgetrennt wird, dadurch gekennzeichnet, daß der heiße Abgasstrom in mehreren hintereinander angeordneten Stufen durch indirekte Wärmeübertragung auf wenigstens drei unterschiedlich hohe abgestufte Temperaturniveaus von 800 bis 1050 °C, 300 bis 400 °C und kleiner 200 °C abgekühlt wird, und daß in den Abgasstrom bei jeder unterschiedlichen Temperaturstufe jeweils nur eine Teilmenge der zur Absorption bzw. Adsorption der Schadstoffe genötigten Sorbens-Gesamtmenge eingebracht wird, wobei vom Feststoff-Sorbens beim erstgenannten Temperaturniveaus bevorzugt das im Abgas enthaltene SOₓ, beim mittleren Temperaturniveau bevorzugt das im Abgas enthaltene HCl sowie HF und beim letztgenannten Temperaturniveau wiederum bevorzugt SOₓ gebunden werden.

2. Verfahren nach Anspruch 1, dadurch gekennzeichnet, daß die Sorbens-Teilmengen in Strömungsrichtung des Abgasstromes gesehen im wesentlichen jeweils hinter den Kühlstufen in den Abgasstrom eingebracht werden.

3. Verfahren nach Anspruch 1, dadurch gekennzeichnet, daß eine Sorbens-Teilmenge in den Abgasstrom vor der ersten Kühlstufe eingebracht wird, und daß diese Sorbens-Teilmenge im Verhältnis zu der im Abgas jeweils vorhandenen Schadstoffmenge unterstöchiometrisch ist, die hinter den Kühlstufen zugeführte Sorbens-Gesamtmenge im Verhältnis zur Schadstoff-Gesamtmenge dagegen überstöchiometrisch ist.

4. Verfahren nach Anspruch 1, dadurch gekennzeichnet, daß als Feststoff-Sorbens bzw. Reagenz ein basisches Sorbens wie feinkörniger Kalkstein, Branntkalk, hochaktives Kalkhydrat oder andere feinkörnige Alkali- oder Erdalkaliverbindungen und/oder metallisch schwefelaffine Sorbentien wie z. B. CuO, ZnO, Fe₂O₃, FeO oder dergleichen verwendet werden.

## Claims

1. Method for the dry purification of waste gas which contains a plurality of pollutants and into which a solids sorbent is introduced which is separated from the purified waste gas according to the pollutant load, characterised in that the hot waste gas stream is in several stages arranged downstream of one another cooled by indirect heat transfer to at least three different graded temperature levels of 800 to 1050 °C, 300 to 400 °C and less than 200 °C, and that there is introduced into the waste gas stream at each of the different temperature stages only a part amount of the total amount of sorbent required for the absorption or adsorption of the pollutants, in which there is bonded by the solids sorbent in the case of the first-mentioned temperature level preferably the SOₓ contained in the waste gas, in the case of the middle temperature level preferably the HCl and HF contained in the waste gas and in the case of the last-mentioned temperature level once again preferably SOₓ.

2. Method according to claim 1, characterised in that the part amounts of sorbent are, viewed in the direction of flow of the waste gas stream, introduced into the waste gas stream in the main downstream of the respective cooling stages.

3. Method according to claim 1, characterised in that a part amount of sorbent is introduced into the waste gas stream upstream of the first cooling stage, and that said part amount of sorbent is substoichiometric in comparison with the particular amount of pollutant contained in the waste gas, whereas the total amount of sorbent supplied downstream of the cooling stages is superstoichiometric in comparison with the total amount of pollutant.

4. Method according to claim 1, characterised in that there is used as the solids sorbent or reagent a basic sorbent such as fine-grained limestone, quick lime, highly active calcium hydroxide or other fine-grained alkaline or alkaline earth compounds and/or metallic sorbents with an affinity for sulphur such as e.g. CuO, ZnO, Fe₂O₃, FeO or similar.

## Revendications

1. Procédé de purification à sec d'un gaz résiduaire contenant de nombreuses substances nuisibles, dans lequel on dispose un absorbant solide dont on élimine le gaz purifié après qu'il s'est chargé des substances nuisibles, procédé caractérisé en ce que l'on refroidit le courant de gaz résiduaire chaud en plusieurs étapes successives par un transfert indirect de chaleur à au moins trois niveaux de température qui diminuent différemment en dégré, de 800 à 1050°C, 300 à 400°C et moins de 200°C, et en ce que l'on n'introduit dans le courant de gaz résiduaire, à chaque étape de température différente, chaque fois qu'une partie de la totalité de l'absorbant qui est nécéssaire pour absorber ou adsorber les substances nuisibles, de préférence les composés SOₓ du gaz résiduaire étant retenus par l'absorbant au premier niveau de température indiqué, de préférence HCl et HF au niveau de température moyen et de préférence les composés SOₓ à nouveau au dernier niveau de température.

2. Procédé selon la revendication 1, caractérisé en ce que l'on introduit les parties de l'absorbant dans le courant de gaz résiduaire dans chaque cas après l'étape de réfroidissement, ceci vu dans le sens de circulation du courant gazeux.

3. Procédé selon la revendication 1, caractérisé en ce que l'on introduit une partie de l'absorbant dans le courant de gaz résiduaire avant la première étape de refroidissement, et en ce que cette partie d'absorbant est dans une proportion inférieure à la proportion stoechiométrique par rapport à la quantité de substances nuisibles que contient le gaz résiduaire, mais par contre la quantité totale d'absorbant qui est introduite après les étapes de refroidissement est supérieure à la proportion stoechiométrique par rapport à la quantité totale de substances nuisibles.

4. Procédé selon la revendication 1, caractérisé en ce que l'on utilise comme absorbant solide ou réactif un absorbant basique en grains fins tel que calcaire, chaux vive ou chaux éteinte très active ou encore d'autres composés à grains fins de métaux alcalins ou alcalinoterreux et/ou des composés de métaux ayant une affinité pour le soufre tels que par exemple CuO, ZnO, Fe₂O₃, FeO ou autres.
